# EUROPEAN PATENT APPLICATION

(11) **EP 4 826 903 A1**
(43) Date of publication of application: **21.10.2026**
(21) Application number: 24923242.2
(22) Date of filing: 09.08.2024
(51) Int. Cl.: H01M 50/609, G06K 17/00

(54) **LIQUID INJECTION SYSTEM AND METHOD FOR BATTERY CELL**

(30) Priority: 07.02.2024 CN 202410175626
(71) Applicant: Contemporary Amperex Technology Co., Limited, Ningde, Fujian 352100 (CN)
(72) Inventor: ZENG, Jiangchuan, Ningde, Fujian 352100 (CN); CAI, Ming, Ningde, Fujian 352100 (CN)
(74) Representative: Aera A/S
(86) International application number: PCT/CN2024/111151
(87) International publication number: WO 2025/167030

(57) **Abstract**

A liquid injection system and method for a battery cell. The liquid inj ection method for a battery cell is applicable to an upper-level computer, and comprises: in response to a battery cell to undergo liquid injection arriving at a liquid injection station, acquiring corresponding position memory information of the battery cell in a tray; determining an actual liquid preparation amount and a preset liquid preparation amount corresponding to a liquid injection mechanism deployed at the liquid injection station; and when the difference between the actual liquid preparation amount and the preset liquid preparation amount is less than or equal to a preset difference value, acquiring liquid injection data of the battery cell, wherein the liquid injection data is acquired by the liquid injection mechanism when performing liquid injection on the battery cell on the basis of the actual liquid preparation amount and the position memory information.

## Description

### CROSS-REFERENCE TO RELATED APPLICATIONS

This disclosure claims the priority to the Chinese Patent Application No. 202410175626.X, filed on February 07, 2024 and entitled "BATTERY INJECTION SYSTEM AND METHOD", which is incorporated herein by reference in its entirety.

### TECHNICAL FIELD

This disclosure relates to the field of battery technology, and in particular to a battery cell injection system and method.

### BACKGROUND

In the related art, when a battery cell enters an injection process for injection, the actual amount of prepared electrolyte provided by an injection mechanism usually deviates from a specified amount of prepared electrolyte, and the magnitude of the difference value affects injection data of the battery cell, thereby affecting the stability of battery cell injection.

### SUMMARY

Embodiments of this disclosure provide a battery cell injection system and method, so as to improve the stability and efficiency of battery cell injection.

Embodiments of this disclosure provide a battery cell injection method applied to an upper computer, where the injection method includes:
in response to a battery cell to be injected reaching an injection station, acquiring position memory information corresponding to the battery cell in a tray; determining an actual amount of prepared electrolyte and a specified amount of prepared electrolyte corresponding to an injection mechanism deployed at the injection station; and acquiring injection data of the battery cell in a case that a difference between the actual amount of prepared electrolyte and the specified amount of prepared electrolyte is less than or equal to a predetermined difference value; where the injection data is acquired by the injection mechanism when performing injection on the battery cell, based on the actual amount of prepared electrolyte and the position memory information.

In this solution, injection is performed when the difference between the actual amount of prepared electrolyte and the specified amount of prepared electrolyte of the injection mechanism satisfies a specified value, which improves the stability and efficiency of injection. In addition, the specific position of a battery cell can be obtained based on the position memory information, further improving the injection efficiency and accuracy of the battery cell.

In an embodiment of this disclosure, the acquiring position memory information corresponding to the battery cell in a tray in response to a battery cell to be injected reaching an injection station includes: acquiring a tray code of the tray in response to the battery cell reaching the injection station; determining the position memory information associated with the tray code in a tray data table; where the tray data table is acquired when the battery cell is at a code scanning station, and the code scanning station is a station previous to the injection station.

In this solution, the associated position memory information is acquired from a pre-stored tray data table based on the acquired tray code. In this way, on the basis of improving the efficiency of acquiring the position memory information, parameter support is provided for subsequent battery cell injection.

In an embodiment of this disclosure, the acquiring a tray code of the tray in response to the battery cell reaching the injection station includes: acquiring an electrolyte preparation code scanning signal sent by a controller in response to the battery cell reaching the injection station; and controlling, based on the electrolyte preparation code scanning signal, a code scanning mechanism to scan the tray to obtain the tray code. In this solution, intelligent acquisition of the tray code of the tray can be implemented based on interaction between a plurality of devices, thereby improving the acquisition efficiency of the tray code.

In an embodiment of this disclosure, the determining an actual amount of prepared electrolyte and a specified amount of prepared electrolyte corresponding to an injection mechanism deployed at the injection station includes: receiving from a controller an electrolyte preparation signal carrying the specified amount of prepared electrolyte; and controlling, based on the electrolyte preparation signal, the injection mechanism to perform electrolyte preparation, and determining a currently read amount of prepared electrolyte of the injection mechanism as the actual amount of prepared electrolyte upon completion of electrolyte preparation by the injection mechanism.

In this solution, the specified amount of prepared electrolyte and the actual amount of prepared electrolyte are sequentially acquired based on the corresponding electrolyte preparation signal, which not only improves the efficiency and accuracy of acquiring the specified amount of prepared electrolyte and the actual amount of prepared electrolyte, but also provides a parameter basis for subsequent battery cell injection.

In an embodiment of this disclosure, the injection method further includes: reading standing data of the battery cell in response to the battery cell being at a standing station in a standing mechanism; and determining the injection data of the battery cell and the standing data of the battery cell as process data of the battery cell in an injection process; where the standing station is a station subsequent to the injection station. In this solution, the battery cell is sequentially transported among a plurality of stations in the injection process, achieving intelligent transfer of the battery cell; in addition, parameters of the battery cell at different stations in the injection process can be acquired in real time, so as to provide more comprehensive battery cell injection data.

In an embodiment of this disclosure, the reading standing data of the battery cell in response to the battery cell being at a standing station in a standing mechanism includes: receiving a reading signal sent by a controller in response to a duration for the battery cell left at the standing station reaching a predetermined duration; and reading, based on the reading signal, a battery cell parameter corresponding to the battery cell after standing to obtain the standing data. In this solution, standing data of the battery cell transported to the standing station can be obtained, thereby providing parameter support for subsequently acquiring more comprehensive injection data of the battery cell in the injection process.

In an embodiment of this disclosure, the injection data at least includes an injection rate, an injection duration, and a vacuuming duration, and the standing data at least includes a standing duration and a voltage parameter. The injection method further includes writing the injection rate, the injection duration, the vacuuming duration, the standing duration, and the voltage parameter into a battery cell data table based on a battery cell code of the battery cell to update the battery cell data table; where the battery cell code is acquired when the battery cell is at a code reading station; and the code reading station is a station previous to the injection station.

In this solution, relevant data in the battery cell data table is updated in real time based on the battery cell code of the battery cell to realize storage of the process data of the battery cell in the injection process, thereby providing parameter support for subsequent viewing or performing related operations on the battery cell.

In an embodiment of this disclosure, the acquiring position memory information corresponding to the battery cell in a tray in response to a battery cell to be injected reaching an injection station includes: presenting an injection display interface; where the injection display interface includes an injection data frame and an electrolyte preparation control; displaying the position memory information corresponding to the battery cell in the tray in the injection data frame in response to the battery cell reaching the injection station; the determining an actual amount of prepared electrolyte and a specified amount of prepared electrolyte corresponding to an injection mechanism deployed at the injection station includes: displaying, in response to a trigger for the electrolyte preparation control, the actual amount of prepared electrolyte and the specified amount of prepared electrolyte corresponding to the injection mechanism in the injection data frame; and the acquiring injection data of the battery cell in a case that a difference between the actual amount of prepared electrolyte and the specified amount of prepared electrolyte is less than or equal to a predetermined difference value includes: displaying the injection data of the battery cell in the injection data frame in response to the difference between the actual amount of prepared electrolyte and the specified amount of prepared electrolyte being less than or equal to the predetermined difference value.

In this solution, when the difference between the actual amount of prepared electrolyte and the specified amount of prepared electrolyte of the injection mechanism satisfies a specified value, the injection mechanism performs injection on the battery cell while displaying injection data of the relevant battery cell, which improves the stability and efficiency of injection. In addition, the specific position of a battery cell can be obtained based on the position memory information, further improving the injection efficiency and accuracy of the battery cell.

In an embodiment of this disclosure, the injection method further includes: displaying the standing data of the battery cell in the injection data frame in response to the battery cell being at a standing station in a standing mechanism; and displaying process data in the injection data frame; where the process data includes the injection data of the battery cell and the standing data of the battery cell. In this solution, the injection data and standing data of the battery cell are displayed in the injection data frame, so that operators of the upper computer can learn the process data of the battery cell in the injection process in a timely manner and perform relevant analysis and operations efficiently based on the displayed data.

Embodiments of this disclosure further provide a battery cell injection system. The injection system includes an upper computer, a controller, and an injection mechanism, where:
the upper computer acquires, in response to a battery cell to be injected reaching the injection station, position memory information corresponding to the battery cell in a tray under the action of the controller; the upper computer determines an actual amount of prepared electrolyte and a specified amount of prepared electrolyte corresponding to the injection mechanism; and the upper computer acquires injection data of the battery cell in a case that a difference between the actual amount of prepared electrolyte and the specified amount of prepared electrolyte is less than or equal to a predetermined difference value; where the injection data is acquired by the injection mechanism when performing injection on the battery cell, based on the actual amount of prepared electrolyte and the position memory information under the action of the controller.

Embodiments of this disclosure provide a battery cell injection method and system. Position memory information corresponding to a battery cell to be injected that has reached an injection station in a tray carrying the battery cell is acquired, a specified amount of prepared electrolyte and an actual amount of prepared electrolyte of an injection mechanism that performs injection on the battery cell at the injection station are determined, and injection data of the battery cell is acquired in a case that a difference between the actual amount of prepared electrolyte and the specified amount of prepared electrolyte is less than or equal to a predetermined difference value. The injection data is acquired by the injection mechanism when performing injection on the battery cell, based on the position memory information and the actual amount of prepared electrolyte. In this way, injection is performed when the difference between the actual amount of prepared electrolyte and the specified amount of prepared electrolyte of the injection mechanism satisfies a specified value, which improves the stability and efficiency of injection. In addition, the specific position of a battery cell can be obtained based on the position memory information, further improving the injection efficiency and accuracy of the battery cell.

The foregoing description is merely an overview of the technical solutions of this disclosure. In order to understand the technical means of this disclosure more clearly, the technical means may be implemented in accordance with the content of the specification. In order to make the aforementioned and other features and advantages of this disclosure clearer, specific embodiments of this disclosure are specifically listed below.

### BRIEF DESCRIPTION OF DRAWINGS

In order to illustrate the technical solutions in the specific embodiments of this disclosure or in the related art more clearly, the drawings required to be used in the description of the specific embodiments or the related art will be briefly described below. Apparently, the accompanying drawings in the following description are only some embodiments of this disclosure. For those of ordinary skill in the art, other drawings may further be obtained according to the structures shown in these accompanying drawings without making creative efforts.
FIG. 1 is a first schematic flowchart of a battery cell injection method according to some embodiments of this disclosure;
FIG. 2 is a second schematic flowchart of a battery cell injection method according to some embodiments of this disclosure;
FIG. 3 is a third schematic flowchart of a battery cell injection method according to some embodiments of this disclosure;
FIG. 4 is a fourth schematic flowchart of a battery cell injection method according to some embodiments of this disclosure;
FIG. 5 is a fifth schematic flowchart of a battery cell injection method according to some embodiments of this disclosure;
FIG. 6 is a schematic diagram of an injection display interface according to some embodiments of this disclosure;
FIG. 7 is a first schematic diagram of an injection display interface of an upper computer according to an embodiment of this disclosure;
FIG. 8 is a second schematic diagram of an injection display interface of an upper computer according to an embodiment of this disclosure;
FIG. 9 is a third schematic diagram of an injection display interface of an upper computer according to an embodiment of this disclosure;
FIG. 10 is a fourth schematic diagram of an injection display interface of an upper computer according to an embodiment of this disclosure;
FIG. 11 is a schematic diagram of a composition structure of a battery cell injection system according to some embodiments of this disclosure;
FIG. 12 is a schematic diagram of interaction for injection code scanning of a battery cell injection system according to some embodiments of this disclosure;
FIG. 13 is a schematic diagram of interaction for electrolyte preparation of a battery cell injection system according to some embodiments of this disclosure;
FIG. 14 is a schematic diagram of interaction for injection and injection amount data reading of a battery cell injection system according to some embodiments of this disclosure; and
FIG. 15 is a schematic diagram of interaction for reading data of a battery cell transported into a standing chamber of a battery cell injection system according to some embodiments of this disclosure.

### DESCRIPTION OF EMBODIMENTS

In order to make the technical solutions and advantages of the embodiments of this application clearer, the specific technical solutions of this application will be further described in detail below with reference to the accompanying drawings in the embodiments of this application. The following embodiments are intended to illustrate, rather than to limit, the scope of this application.

Unless otherwise defined, all technical and scientific terms used in this application have the same meaning as commonly understood by those skilled in the technical field to which this application belongs. The terms used in this application are only for describing the current embodiment and are not intended to limit this application.

In the following description, references are made to "some embodiments", "the present embodiment", "this embodiment", examples, and the like, which describe a subset of all possible embodiments, but it can be understood that "some embodiments" may be the same subset or different subsets of all possible embodiments, and may be combined with each other without conflict.

If a similar description of "first/second" appears in the application document, the following explanation is added. In the following description, the terms "first\second\third" involved are only used to distinguish similar objects and do not represent a specific ordering of the objects. It can be understood that "first\second\third" can be interchanged with a specific order or sequence where permitted, so that the embodiments described herein can be implemented in an order other than that illustrated or described herein.

The term "and/or" in the embodiments of this disclosure is only a description of an association relationship of associated objects, indicating that three relationships may exist. For example, object A and/or object B may indicate three cases: object A exists alone, object A and object B both exist, and object B exists alone.

At present, the application of new energy batteries is becoming more and more extensive in life and industries. New energy batteries are not only used in energy storage power systems such as hydropower, thermal power, wind power, and solar power stations, but are also widely used in electric transportation tools such as electric bicycles, electric motorcycles, and electric vehicles, as well as in many fields such as aerospace. With the continuous expansion of the application field of traction batteries, the market demand is also continuously increasing. In the embodiments of this disclosure, the battery involved may be a battery cell. A battery cell refers to a basic unit that can implement mutual conversion between chemical energy and electrical energy, and can be used for making a battery module or a battery pack, thereby supplying power to electric apparatuses. The battery cell may be a secondary battery. A secondary battery refers to a battery cell that can continue to be used by activating active materials through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited herein.

In the embodiments of this disclosure, a battery may alternatively be a single physical module including one or more battery cells to provide higher voltage and capacity. When a plurality of battery cells are provided, the plurality of battery cells are connected in series, parallel, or series-parallel through a busbar.

In the related art, as a key process in the lithium-ion battery manufacturing process, injection not only affects battery performance but also hinders battery production efficiency. In the battery cell injection process, a specified amount of prepared electrolyte provided to the injection pump is different from the actual amount of prepared electrolyte of the injection pump, and the magnitude of the difference value affects the injection data of the battery cell. For example, if the difference between the specified amount of prepared electrolyte and the actual amount of prepared electrolyte is excessively large, the upper computer of the injection process usually reports the information of the excessive difference to the central control system of the battery cell injection link and an alarm is generated accordingly, so that the operator can check for the cause. In this situation, the upper computer is relatively passive when injection is unexpected, that is, corresponding injection or injection alarming is not performed automatically, thereby affecting the stability of battery cell injection.

In view of the foregoing problems, the embodiments of this disclosure provide a battery cell injection method and system, so that injection is performed when a difference between the actual amount of prepared electrolyte and the specified amount of prepared electrolyte of the injection mechanism satisfies a specified value, so as to improve the stability and efficiency of injection. In the injection link, injection is performed based on position memory information of the battery cell in a tray carrying the battery cell, that is, the specific position of the battery cell, further improving the injection efficiency and accuracy of the battery cell.

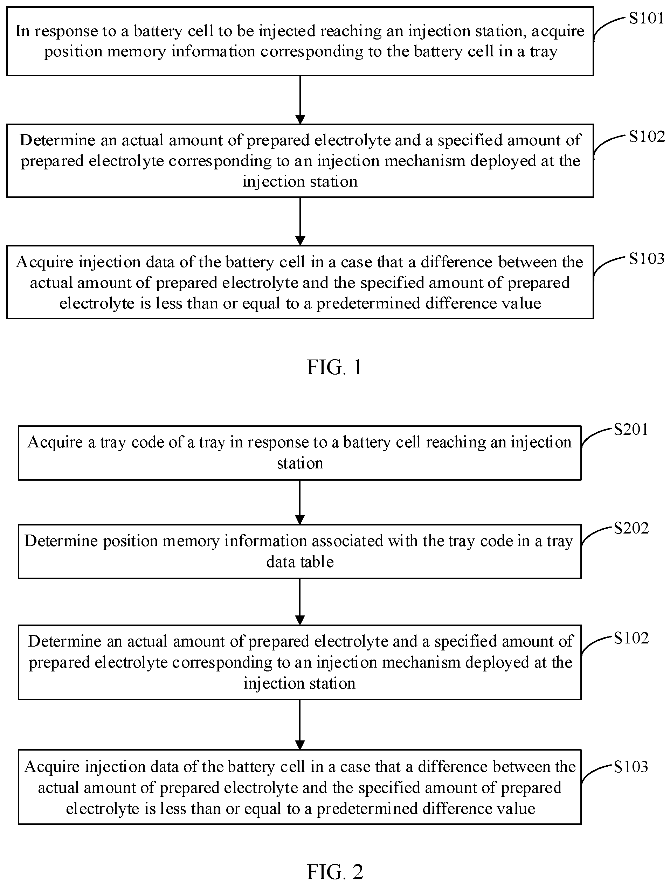

For ease of description, the following embodiments are described by taking a battery cell injection method according to some embodiments of this disclosure as an example. The injection method is applied to an upper computer. FIG. 1 is a first schematic flowchart of a battery cell injection method according to some embodiments of this disclosure. The following description is made with reference to FIG. 1.

Step S101. In response to a battery cell to be injected reaching an injection station, acquire position memory information corresponding to the battery cell in a tray.

In an embodiment of this disclosure, the injection station may be a station for injecting electrolyte into a battery cell. The injection station may be provided with an injection mechanism (an injection pump) for injecting electrolyte into the battery cell. The injection mechanism herein is usually a metering injection pump provided with a measuring container for holding electrolyte.

In an embodiment of this disclosure, the tray is used to carry the battery cell to be injected, that is, the battery cell entering the injection process. A plurality of slots may be provided in the tray, and the slots are used to hold a plurality of battery cells (batteries). Related operations such as injection, welding, or welding detection may be performed on the battery cells placed in the slots. In addition, the shapes and sizes of the plurality of slots provided in the tray match the battery cells or batteries.

In an embodiment of this disclosure, a quantity of slots in the tray may be 8, 10, 32, or the like. The quantity of the slots herein may be determined according to actual requirements for battery cell injection, which is not limited in this embodiment of this disclosure.

In an embodiment of this disclosure, the battery cell to be injected may refer to a battery cell that requires a primary injection, or may refer to a battery cell that requires a secondary injection, which is not limited in this embodiment of this disclosure. It should be noted that the primary injection of a battery cell is performed during manufacturing of the battery cell to maintain a stable capacity for the battery cell and guarantee the service life of the battery cell. The secondary injection is performed during the use of the battery cell to maintain the consistent capacity of the battery cell and extend the service life of the battery cell.

In an embodiment of this disclosure, the battery cell may refer to a battery cell of any shape such as a prismatic battery cell or a cylindrical battery cell. The battery cell usually refers to a battery cell (Battery Cell), that is, one of the basic units constituting a battery. The battery cell is a core component of a battery, configured to store and release electrical energy. The battery cell herein may be a lithium-ion battery cell (Li-ion Cell), a lithium polymer battery cell (Li-polymer Cell), a nickel-hydrogen battery cell (NiMH Cell), or the like. The battery cell type is not limited in the embodiments of this disclosure and may be selected according to actual application scenarios.

In an embodiment of this disclosure, the battery cell is a core component of a battery pack. The battery pack usually includes a plurality of battery cells, and the plurality of battery cells are combined to provide electrical energy of desired capacity and voltage. The battery pack refers to an apparatus formed by a plurality of battery cells, and is intended to store and supply electrical energy. The components of the battery pack at least include a battery cell, a battery management system (Battery Management System, BMS), a housing, a wiring harness, a connector, and a port. These components work together to combine the battery cells into a fully functional battery pack for various application scenarios. For example, the battery pack may be applied to an electric vehicle, an energy storage system, a portable electronic device, a solar system, a wind energy system, an emergency backup power supply, an electric tool, an electric bicycle, or the like. This is not limited in this embodiment of this disclosure and may be selected according to actual application scenarios.

In an embodiment of this disclosure, the battery cell to be injected reaching the injection station may refer to that a battery cell transportation mechanism transports a tray carrying the battery cell to the injection station, or that a control system (controller) corresponding to the injection process of the battery cell controls the transportation of the tray so that the battery cell to be injected reaches the injection station, or that the controller controls a grasping mechanism to grasp the battery cell to be injected from a previous station to the injection station.

In an embodiment of this disclosure, there may be one or more battery cells to be injected, which is not limited herein.

In an embodiment of this disclosure, the upper computer may be an industrial computer (industrial control equipment). The upper computer may include a processor and a memory, where the memory may be used to store a program running on the processor, and the processor can execute the battery cell injection method when the program is running.

In an embodiment of this disclosure, the upper computer can exchange data with the controller, and the controller may be a programmable logic controller (Programmable Logic Controller, PLC) or the like.

In an embodiment of this disclosure, the upper computer can read the barcode of the tray under the action of a reading signal sent by the controller, and then acquire corresponding position memory information from a previously known tray data table based on the barcode. The position memory information may be generated when the battery cell is placed in the tray, and the battery cell has been placed in the tray before reaching the injection station, so that the upper computer can acquire the position memory information from data generated in advance. In an embodiment of this disclosure, the position memory information corresponding to the battery cell in the tray may be denoted by a slot number corresponding to the battery cell in the tray or the like.

It can be understood that the position memory information of the battery cell in the tray is acquired in this step. This provides a parameter basis for subsequent injection based on the position memory information, thereby improving the stability and efficiency of battery cell injection.

Step S102. Determine an actual amount of prepared electrolyte and a specified amount of prepared electrolyte corresponding to an injection mechanism deployed at the injection station.

In an embodiment of this disclosure, the injection mechanism deployed at the injection station may be arranged corresponding to the battery cell at the injection station, which is not limited herein. For example, the injection mechanism may be deployed directly above the injection station, or may be deployed on a side of the injection station and is capable of rotating at a predetermined angle, so as to perform injection on the battery cell at the injection station.

In an embodiment of this disclosure, if the injection mechanism deployed at the injection station is eight parallel metering injection pumps, that is, at the injection station, electrolyte injection can be simultaneously performed on eight battery cells to be injected at the injection station. The eight battery cells to be injected are arranged corresponding to the positions of the eight metering injection pumps on a one-to-one basis.

In an embodiment of this disclosure, the specified amount of prepared electrolyte may vary according to different battery cell requirements. For example, for a 100 Ah prismatic aluminum-shell battery, the injection amount corresponding to the primary injection is usually around 300 g to 350 g.

In an embodiment of this disclosure, the injection mechanism is controlled to perform electrolyte preparation based on the specified amount of prepared electrolyte, and after the injection mechanism performs electrolyte preparation based on the specified amount of prepared electrolyte, the actual amount of prepared electrolyte of the injection mechanism is read. During actual battery cell injection, a difference is usually found between the specified amount of prepared electrolyte and the actual amount of prepared electrolyte corresponding to the injection mechanism.

It should be noted that an injection mechanism corresponding to the position memory information of the battery cell in the tray may be selected from a plurality of candidate injection mechanisms deployed at the injection station, and then the actual amount of prepared electrolyte and the specified amount of prepared electrolyte of the target injection mechanism are determined.

It can be understood that the actual amount of prepared electrolyte and the specified amount of prepared electrolyte corresponding to the injection mechanism are acquired in this step. This provides a basis for subsequent determination based on the difference therebetween. That is, it is determined based on such difference that a direct injection is performed, an alarm is generated for a pause, or other processing is performed.

Step S103. Acquire injection data of the battery cell in a case that a difference between the actual amount of prepared electrolyte and the specified amount of prepared electrolyte is less than or equal to a predetermined difference value.

The injection data is acquired by the injection mechanism when performing injection on the battery cell, based on the actual amount of prepared electrolyte and the position memory information.

In an embodiment of this disclosure, after acquiring the actual amount of prepared electrolyte and the specified amount of prepared electrolyte, the upper computer can compare them to determine the difference therebetween. If the difference is less than or equal to the predetermined difference value, the injection data of the battery cell can be directly acquired; if the difference is greater than the predetermined difference value, an alarm signal or the like may be generated correspondingly.

In an embodiment of this disclosure, the predetermined difference value may be a predetermined numerical value, for example, 10 g, which may be determined according to the actual production requirements of the battery cell in the injection process. This is not limited herein.

It should be noted that an excessive injection amount for the battery cell in the injection link easily causes battery swelling, leading to uneven battery thickness. Conversely, an insufficient injection amount for the battery cell in the injection link reduces the battery capacity and cycle life. Furthermore, unequal injection amounts for battery cells lead to inconsistent battery capacity and cycling performance. Therefore, it is necessary to control the injection amount for the battery cell according to predetermined requirements.

In an embodiment of this disclosure, the case may be that: an injection nozzle of the injection mechanism is aligned with an injection hole of a battery cell based on the position memory information, and injection is performed on the battery cell at a predetermined injection rate based on the actual amount of prepared electrolyte, so as to obtain the injection data; where the injection hole of the battery cell may be located on a top cover of the battery.

In an embodiment of this disclosure, the injection data includes but is not limited to: an injection duration corresponding to the battery cell, an actual amount of prepared electrolyte, an injection rate (the injection rate includes but is not limited to an average injection rate of the entire injection link, the highest injection rate, or the lowest injection rate), or the like.

It can be understood that in this solution, injection is performed when the difference between the actual amount of prepared electrolyte and the specified amount of prepared electrolyte of the injection mechanism satisfies a specified value, which improves the stability and efficiency of injection. In addition, the specific position of a battery cell can be obtained based on the position memory information, further improving the injection efficiency and accuracy of the battery cell.

In some embodiments of this disclosure, the acquisition of the position memory information in the step S101 may be implemented through the following steps S201 and S202. Referring to FIG. 2, FIG. 2 is a second schematic flowchart of a battery cell injection method according to some embodiments of this disclosure. The following description is made with reference to FIG. 2.

Step S201. Acquire a tray code of the tray in response to the battery cell reaching the injection station.

In an embodiment of this disclosure, when a battery cell to be injected reaches the injection station, image acquisition may be performed on the tray, and the tray code of the tray carrying the battery cell may be identified and acquired from the image obtained by image acquisition.

In an embodiment of this disclosure, the tray code may be expressed in the form of a barcode, a quick response code, or the like, which is not limited herein.

It should be noted that the tray code is usually used to identify and track the battery cells loaded therein in logistics, for example, battery cell transportation management.

In an embodiment of this disclosure, the tray code may be a mark on the tray, or may be a tray code associated with the tray and stored in the upper computer.

In an embodiment of this disclosure, the acquisition of the tray code in the step S201 may include the following steps S2011 and S2012.

Step S2011. Acquire an electrolyte preparation code scanning signal sent by a controller in response to the battery cell reaching the injection station.

In an embodiment of this disclosure, when detecting that a battery cell reaches the injection station, a controller in an injection system where the upper computer is located sends an electrolyte preparation code scanning signal to the upper computer. The case may be that: a detector is provided at the injection station, and sends an arrival signal to the controller when detecting that the battery cell arrives, so that the controller sends the electrolyte preparation code scanning signal to the upper computer.

Step S2012. Control, based on the electrolyte preparation code scanning signal, a code scanning mechanism to scan the tray to obtain the tray code.

In an embodiment of this disclosure, after receiving the electrolyte preparation code scanning signal, the upper computer can control the code scanning mechanism to scan the tray to obtain the tray code. The code scanning mechanism may be deployed on the upper computer, and the code scanning mechanism may be a code scanner.

It can be understood that in this, intelligent acquisition of the tray code of the tray can be implemented based on interaction between a plurality of devices, thereby improving the tray code acquisition efficiency.

In an embodiment of this disclosure, the acquisition of the tray code in the step S2012 may include the following steps A1 and A2.

Step A1. Control, based on the electrolyte preparation code scanning signal, the code scanning mechanism to scan the tray to acquire an initial code of the tray.

Step A2. Determine the initial code as the tray code in a case that a verification result of the initial code is verification success.

In an embodiment of this disclosure, the code scanning mechanism may be further controlled to scan the tray, based on the acquired electrolyte preparation code scanning signal, and the initial code obtained by scanning may be verified. The verification means includes but is not limited to: verifying a format of the initial code and verifying a length of the initial code, so as to obtain a verification result. If the verification result is verification success, the initial code may be determined as the tray code.

As described above, determining that the verification result corresponding to the initial code of the tray is verification success may refer to that the format of the initial code is consistent with the format of a predetermined tray code, and the length of the initial code is the same as the length of the predetermined tray code. The predetermined tray code may be data stored in advance in the upper computer.

It should be noted that, if the verification result of the initial code is verification failure, the verification may be performed again, or a new initial code may be identified and acquired and verified to prevent a verification error or reduce the probability of an error in the link of acquiring the initial code. Alternatively, if the verification result of the initial code is verification failure, a verification failure signal, an alarm signal, or the like may be reported. The verification failure signal may further be sent to the controller so that the controller performs related operations, for example, shutting down (stopping the operation of the upper computer, and/or stopping its own operation, and/or stopping the operation of the code scanning mechanism), so that relevant staff can check for the cause of the exception.

It can be understood that through the foregoing steps, when read, the initial code of the tray code is verified to improve the accuracy of the subsequently obtained tray code.

Step S202. Determine the position memory information associated with the tray code in a tray data table.

The tray data table is data acquired when the battery cell is at a code scanning station, and the code scanning station is a station previous to the injection station.

In an embodiment of this disclosure, the position memory information may be determined from a pre-stored or acquired tray data table based on the tray code. The tray data table may be acquired by the upper computer when performing data code reading at the code scanning station. In the injection process, the battery cell is transported to the code scanning station and the injection station in sequence.

In an embodiment of this disclosure, the injection station and the code reading station may be adjacent or far apart. For example, another station, for example, a detection station or a weighing station, is arranged between the code scanning station and the injection station. The code scanning station may be the first station for the battery cell to enter the injection process.

It should be noted that the tray data table may include information of a plurality of trays, where the information of each tray may at least include a tray code, position memory information of battery cells in the tray, and a position mark of the tray on a station. The tray code, the position memory information, and the position mark of each tray correspond to each other on a one-to-one basis.

It can be understood that through the foregoing step, the associated position memory information is acquired from the tray data table based on the acquired tray code. This helps accurately locate the battery cell to be injected while improving the efficiency of acquiring the position memory information, providing parameter support for subsequent battery cell injection.

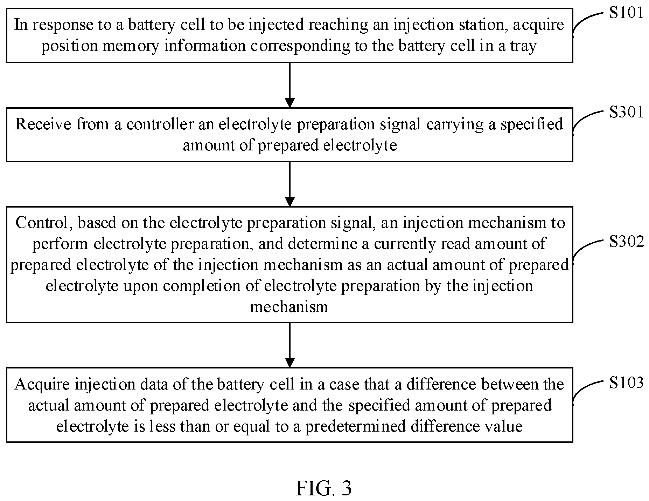

In some embodiments of this disclosure, the determination of the actual amount of prepared electrolyte and the specified amount of prepared electrolyte of the injection mechanism in the step S102 may be implemented through the following steps S301 and S302. FIG. 3 is a third schematic flowchart of a battery cell injection method according to some embodiments of this disclosure. The following description is made with reference to FIG. 3.

Step S301. Receive from a controller an electrolyte preparation signal carrying the specified amount of prepared electrolyte.

In an embodiment of this disclosure, the electrolyte preparation signal from the controller for controlling the injection mechanism to perform electrolyte preparation may be received when it is detected that the battery cell reaches the injection station. The controller can exchange information with the upper computer, and the injection system configured for injection of the battery cell at least includes a controller and an upper computer. For example, it may further include a code scanning mechanism, an injection mechanism, and the like.

In an embodiment of this disclosure, the specified amount of prepared electrolyte may be determined according to an attribute parameter of the battery cell, such as a size of the battery cell and a shape of the battery cell. The controller may determine the specified amount of prepared electrolyte based on pre-collected attribute parameters of the battery cell to be injected.

Step S302. Control, based on the electrolyte preparation signal, the injection mechanism to perform electrolyte preparation, and determine a currently read amount of prepared electrolyte of the injection mechanism as the actual amount of prepared electrolyte upon completion of electrolyte preparation by the injection mechanism.

In an embodiment of this disclosure, the upper computer controls, based on the received electrolyte preparation signal, the injection mechanism to perform electrolyte preparation based on the specified amount of prepared electrolyte, and upon completion of electrolyte preparation by the injection mechanism, reads and determines the current amount of prepared electrolyte of the injection mechanism as the actual amount of prepared electrolyte.

It should be noted that there is usually a difference between the actual amount of prepared electrolyte and the specified amount of prepared electrolyte. A quantity of injection mechanisms may match a quantity of battery cells to be injected on a one-to-one basis, so that the actual injection amount of each injection mechanism may be the same or different.

In an embodiment of this disclosure, the injection mechanism is empty by default before performing electrolyte preparation.

It can be understood that through the foregoing step, the specified amount of prepared electrolyte and the actual injection amount are sequentially acquired based on the electrolyte preparation signal. This not only improves the efficiency and accuracy of acquiring the specified amount of prepared electrolyte and the actual injection amount, but also provides a parameter basis for subsequent battery cell injection.

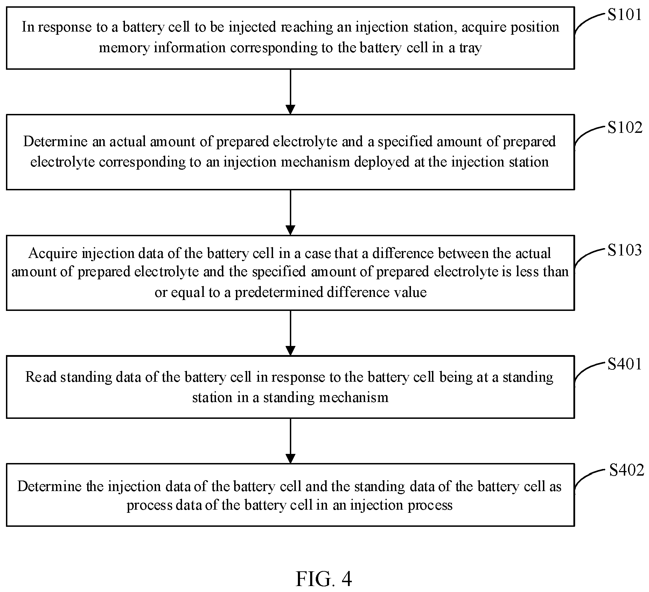

In some embodiments of this disclosure, after the battery cell is injected, the injected battery cell needs to be placed in a standing mechanism for standing so that the battery cell is fully infiltrated by the injected electrolyte. That is, the following steps S401 and S402 may further be performed in the injection method provided in the foregoing embodiments. Referring to FIG. 4, FIG. 4 is a fourth schematic flowchart of a battery cell injection method according to some embodiments of this disclosure. The following description is made with reference to FIG. 4.

Step S401. Read standing data of the battery cell in response to the battery cell being at a standing station in a standing mechanism.

The standing station is a station subsequent to the injection station.

In an embodiment of this disclosure, the standing station and the injection station may be adjacent or far apart. The case may be that: a battery cell transportation mechanism transports the battery cell from the injection station to the standing station; or a controller for the injection station in the injection process controls the transportation of the tray so that the injected battery cell is transported from the injection station to the standing station.

In an embodiment of this disclosure, the standing mechanism may be a vacuum chamber mechanism.

It should be noted that the electrolyte of a lithium battery is intended to conduct ions between the positive and negative electrodes of the battery and serves as a medium for charging and discharging, so that the electrolyte fully and uniformly infiltrates into the interior of the lithium battery. Therefore, standing is an important link in the injection process. The battery cell (injected battery cell) is transported to the standing station in the standing mechanism for standing, so that the injected electrolyte fully infiltrates the battery cell. It should be noted that a longer standing time means a better electrolyte infiltration, which improves the battery performance and extends the battery life.

In an embodiment of this disclosure, after a battery cell is left at the standing station for a predetermined period of time, the standing duration and voltage parameter of the battery cell (the infiltration effect can be represented by the voltage parameter of the battery cell herein) may be read and determined as the standing data of the battery cell.

In an embodiment of this disclosure, the quantity and layout of standing stations deployed inside the standing mechanism may be determined according to the actual production requirements for the battery cell.

In an embodiment of this disclosure, the acquisition of the standing data of the battery cell in the step S401 may include the following steps S4011 and S4012.

Step S4011. Receive a reading signal sent by a controller in response to a duration for the battery cell left at the standing station reaching a predetermined duration.

In an embodiment of this disclosure, the predetermined duration is specified according to the actual production requirements for the battery cell and is associated with attribute parameters of the battery cell (for example, the size of the battery cell and the shape of the battery cell). For example, the predetermined duration is 24 hours, 20 hours, or the like.

Step S4012. Read, based on the reading signal, a battery cell parameter corresponding to the battery cell after standing to obtain the standing data.

In an embodiment of this disclosure, battery cell parameters, that is, the standing data, corresponding to the battery cell after standing for a predetermined duration are read based on the acquired reading signal.

The standing data includes but is not limited to a standing duration and a voltage parameter. The voltage parameter may be a voltage value and an internal resistance value of the battery cell measured at intervals within the standing duration for which the battery cell is left in the standing mechanism.

It can be understood that through the foregoing step, the standing data of the battery cell transported to the standing station can be obtained, thereby providing parameter support for subsequently acquiring more comprehensive process data of the battery cell in the injection process.

Step S402. Determine process data of the battery cell in an injection process based on the injection data of the battery cell and the standing data of the battery cell.

In an embodiment of this disclosure, the injection data and the standing data may be jointly used as the process data of the battery cell in the injection process. The process data of the battery cell in the injection process may also be acquired based on differences between some data with the same attributes in the injection data and the standing data, the injection data, and the standing data.

It can be understood that through the foregoing step, the standing data corresponding to the battery cell is acquired, and the standing data and the previously acquired injection data are both used as the process data of the battery cell in the injection process. In this way, the battery cell is sequentially transported among a plurality of stations in the injection process, achieving intelligent transportation of the battery cell. In addition, parameters of the battery cell at different stations in the injection process can be acquired in real time to provide more comprehensive battery cell injection data.

As described above, the injection data at least includes an injection rate, an injection duration, and a vacuuming duration, and the standing data at least includes a standing duration and a voltage parameter. After acquired, the injection data and standing data of the battery cell can be stored in a battery cell data table corresponding to the battery cell in the production link (injection link). That is, the injection method provided in this embodiment of this disclosure may further include the following step B.

Step B. Write the injection rate, the injection duration, the vacuuming duration, the standing duration, and the voltage parameter into a battery cell data table based on a battery cell code of the battery cell to update the battery cell data table.

The battery cell code is acquired when the battery cell is at a code reading station; and the code reading station is a station previous to the injection station.

In an embodiment of this disclosure, the battery cell code of the battery cell may be information acquired by a code reading mechanism performing code reading on the battery cell after the battery cell is transported to a code reading station. The code reading station and the injection station may be adjacent or far apart.

It should be noted that the quantity of battery cells included in the battery cell data table may be determined according to actual production. The battery cell data table herein may include data of battery cells acquired by the upper computer within a predetermined period of time; where the predetermined duration may be one month, three months, or the like, which is not limited in this embodiment of this disclosure.

In an embodiment of this disclosure, each battery cell in the battery cell data table corresponds to a piece of process data in the injection process. Each battery cell in the battery cell data table corresponds to a battery cell code (read and stored at the code reading station), a tray code of the tray where the battery cell is located (read and stored at the code scanning station), process data of the battery cell (acquired at the injection station and the standing station), weighing data (weight data corresponding to the first station and the last station when the battery cell to be injected enters the injection process), or the like.

In an embodiment of this disclosure, based on the battery cell code of the battery cell, the acquired injection rate, injection duration, vacuuming duration, standing duration, and voltage parameter are written into an area associated with the battery cell code in the battery cell data table to update the battery cell data table.

It can be understood that through the foregoing step, relevant data in the battery cell data table is updated in real time based on the battery cell code of the battery cell to store the process data of the battery cell in the injection process, thereby providing parameter support for subsequent viewing or performing related operations on the battery cell.

In some embodiments of this disclosure, before the battery cell reaches the injection station, a capping operation also needs to be performed to shield part of the battery cell and only leave the injection hole of the battery cell. That is, the injection method provided in the foregoing embodiments may further include the following steps C1 and C2.

Step C1. Receive a capping signal sent by a controller in response to the battery cell reaching a capping station.

The capping station is a station previous to the injection station.

In an embodiment of this disclosure, when the battery cell reaches the capping station, a detector deployed at the capping station sends an arrival signal to the controller so that the upper computer receives the capping signal sent by the controller.

It should be noted that a tray carrying a plurality of battery cells may be transported to the capping station to trigger the controller to send a capping signal, and the capping signal is used for performing a capping operation on the plurality of battery cells in the tray.

Step C2. Control a mechanical gripper to grasp a cup sleeve based on the capping signal for performing a capping operation on the battery cell in the tray to obtain the battery cell with an injection hole exposed, so as to implement injection on the battery cell.

In an embodiment of this disclosure, the cup sleeve is a tool disposed corresponding to the tray carrying the battery cell. By placing the cup sleeve above the battery cell in the tray according to a predetermined positional relationship, the battery cell placed in the tray can be shielded, leaving only the injection hole of the battery cell, which provides convenience for subsequent battery cell injection. The predetermined positional relationship may refer to a mapping relationship between a plurality of slots arranged in the tray and a plurality of slots arranged on the cup sleeve. For example, a plurality of slots are arranged in the tray according to predefined arrangement rules, and correspondingly a plurality of slots are also arranged on the cup sleeve according to predefined arrangement rules.

In an embodiment of this disclosure, based on the capping signal, a mechanical gripper can be controlled to grasp a cup sleeve to perform capping on the battery cell in the tray, so that when the battery cell is transported to the subsequent injection station, only the injection hole is left. The capping operation is intended to protect the internal structure of the battery cell, which can prevent external substances (such as electrolyte in the subsequent injection link) from corroding and damaging the battery cell, and improve the safety and stability of the battery cell in the injection process, that is, in the subsequent injection process.

It can be understood that through the foregoing step, based on the capping operation at the capping station, the injection hole is exposed when the battery cell is transported to the subsequent injection station, facilitating the injection by the injection mechanism. In this way, the corrosion and damage of the battery cell caused by the electrolyte in the injection link can be reduced, improving the safety and stability of the battery cell in the subsequent injection process.

In the battery cell injection method provided in the embodiments of this disclosure, in a case that the difference between the actual amount of prepared electrolyte and the specified amount of prepared electrolyte is less than or equal to a predetermined difference value, the injection mechanism performs injection on the battery cell based on the actual amount of prepared electrolyte and the position memory information; in a case that the difference between the actual amount of prepared electrolyte and the specified amount of prepared electrolyte is greater than the predetermined difference value, an alarm signal or a signal indicating such exception may be displayed, or a signal of exception is reported to a controller in an injection system where the upper computer is located so that the controller performs a corresponding shutdown operation or the like. This is not limited in the embodiments of this disclosure.

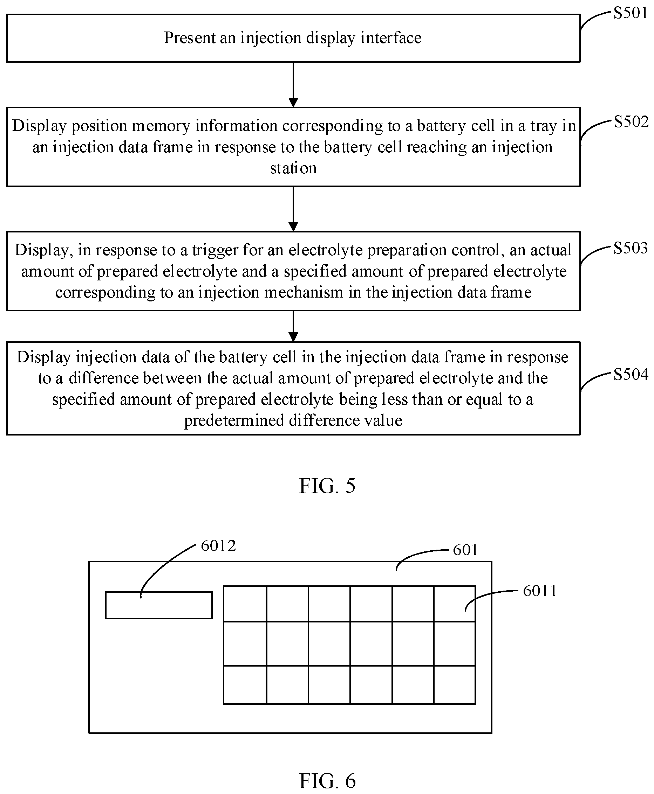

The upper computer may present an injection display interface, and the injection display interface may be used to display a plurality of pieces of information involved in the foregoing embodiments, for example, position memory information corresponding to the battery cell in the tray, and an actual amount of prepared electrolyte and a specified amount of prepared electrolyte corresponding to the injection mechanism. Steps S101 to S104 provided in the foregoing embodiments may be implemented through the following steps S501 to S504. Referring to FIG. 5, FIG. 5 is a fifth schematic flowchart of a battery cell injection method according to some embodiments of this disclosure. The following description is made with reference to FIG. 5.

Step S501. Present an injection display interface.

The injection display interface includes an injection data frame and an electrolyte preparation control.

Step S502. Display position memory information corresponding to the battery cell in the tray in the injection data frame in response to the battery cell reaching the injection station.

Step S503. Display, in response to a trigger for the electrolyte preparation control, the actual amount of prepared electrolyte and the specified amount of prepared electrolyte corresponding to the injection mechanism in the injection data frame.

Step S504. Display the injection data of the battery cell in the injection data frame in response to the difference between the actual amount of prepared electrolyte and the specified amount of prepared electrolyte being less than or equal to the predetermined difference value.

In an embodiment of this disclosure, the expression forms of the injection data frame and the electrolyte preparation control included in the injection display interface may be determined according to actual requirements. For example, the injection data frame is displayed in the form of a table or curve, and the electrolyte preparation control is displayed in the form of a predefined icon.

In an embodiment of this disclosure, the injection data frame and the electrolyte preparation control may be displayed on the injection display interface at the same time, displayed in different areas, displayed in different pages, and may be switched through manual click operations or trigger operations to display the injection data frame or the electrolyte preparation control.

It should be noted that the injection display interface includes but is not limited to the foregoing injection data frame and electrolyte preparation control, and may further display a schematic structural diagram of the upper computer in different dimensions (three-dimensional and/or two-dimensional).

In an embodiment of this disclosure, the specific implementation of the steps S501 to S504 may be obtained with reference to the foregoing description of the battery cell injection method.

Referring to FIG. 6, FIG. 6 is a schematic diagram of an injection display interface according to some embodiments of this disclosure, where an injection display interface 601 includes an injection data frame 6011 and an electrolyte preparation control 6012. FIG. 6 is only an example, and the injection display interface in the actual production link of the battery cell may be determined according to actual requirements.

It can be understood that through the foregoing steps, when the difference between the actual amount of prepared electrolyte and the specified amount of prepared electrolyte of the injection mechanism satisfies a specified value, the injection mechanism performs injection on the battery cell while displaying injection data of the battery cell, which improves the stability and efficiency of injection. In addition, the specific position of a battery cell can be obtained based on the position memory information, further improving the injection efficiency and accuracy of the battery cell.

As described above, the injection method further includes the following steps.

Step D1. Display the standing data of the battery cell in the injection data frame in response to the battery cell being at the standing station in the standing mechanism.

Step D2. Display process data in the injection data frame.

The process data includes the injection data of the battery cell and the standing data of the battery cell.

In an embodiment of this disclosure, the injection data at least includes an injection rate, an injection duration, and a vacuuming duration, and the standing data at least includes a standing duration and a voltage parameter.

A battery cell data table may also be presented on the injection display interface. Correspondingly, the injection rate, the injection duration, the vacuuming duration, the standing duration, and the voltage parameter may be written into the battery cell data table based on the battery cell code of the battery cell to update the presented battery cell data table. The battery cell code is acquired when the battery cell is at a code reading station; and the code reading station is a station previous to the injection station.

In an embodiment of this disclosure, the battery cell data table may be presented in another data frame in the injection display interface, or may be presented in the injection data frame, which is not limited herein.

It can be understood that through the foregoing steps, the injection data and standing data of the battery cell are displayed in the injection data frame, so that operators of the upper computer can learn the process data of the battery cell in the injection process in a timely manner and perform relevant analysis and operations efficiently based on the displayed data.

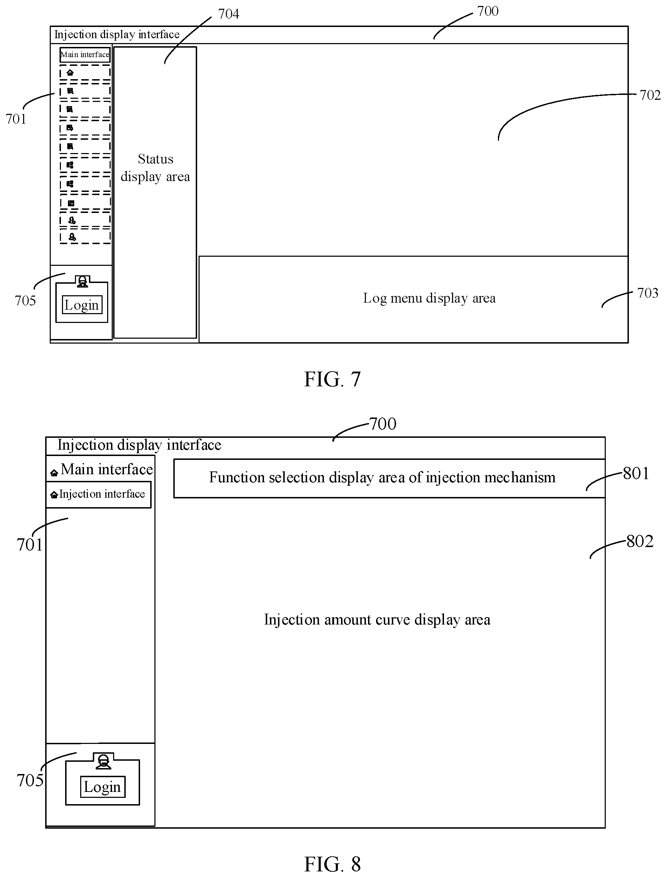

Referring to FIG. 7, FIG. 7 is a first schematic diagram of an injection display interface of an upper computer according to an embodiment of this disclosure, where the injection display interface 700 may include a function interface selection area 701. In the function interface selection area 701, when a trigger for a control corresponding to a main interface is received, a three-dimensional schematic structure display area 702 of the upper computer, a log menu display area 703 of the upper computer, and a status display area 704 may be displayed on the injection display interface 700. Information such as a state of a connection between PLCs communicating with the upper computer, a code scanning state involved in the front end of the injection process of the battery cell to be injected, and a Hipot test state may be displayed in the status display area. In addition, a user login area for operating the upper computer, that is, 705, may also be presented on the injection display interface 700.

As described above, referring to FIG. 8, FIG. 8 is a second schematic diagram of an injection display interface of an upper computer according to an embodiment of this disclosure. In a function interface selection area 701 included in the injection display interface 700, when a trigger for a control corresponding to the injection interface is received, a function selection display area 801 and an injection amount curve display area 802 of the injection mechanism and the like may be displayed on the injection display interface 700. In this way, real-time injection data of the injection link can be displayed in the form of a curve on the injection display interface.

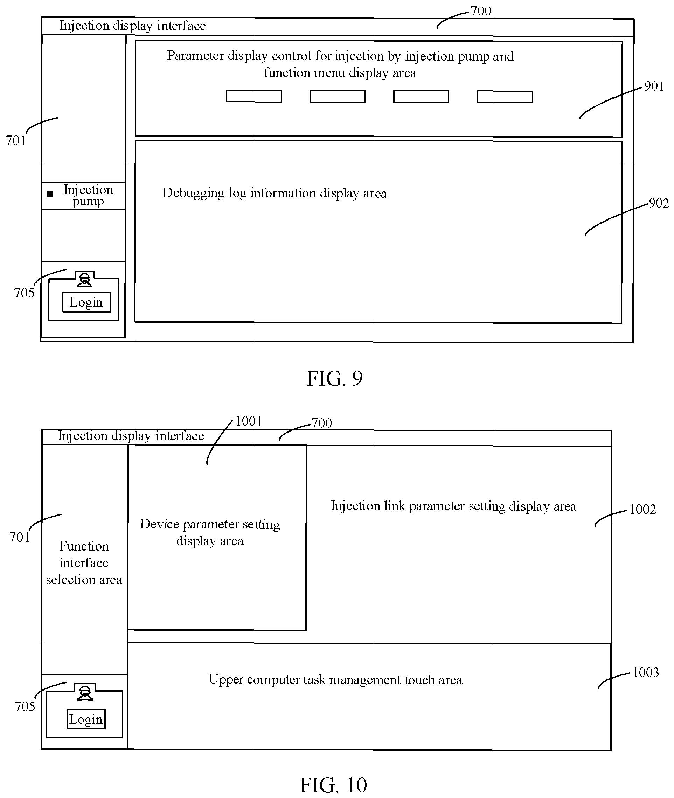

Similarly, referring to FIG. 9, FIG. 9 is a third schematic diagram of an injection display interface of an upper computer according to an embodiment of this disclosure. In the function interface selection area 701 included in the injection display interface 700, when a trigger for a control corresponding to an injection pump is received, a parameter display control for injection by the injection pump and a function menu display area 901, and a debugging log information display area 902 may be displayed on the injection display interface 700. In this way, operators of the upper computer can manually select display areas related to injection and view and save injection logs.

In addition, referring to FIG. 10, FIG. 10 is a fourth schematic diagram of an injection display interface of an upper computer according to an embodiment of this disclosure. In the function interface selection area 701 included in the injection display interface 700, when a trigger for a control of relevant device parameters is received, a device parameter setting display area 1001, an injection link parameter setting display area 1002, and an upper computer task management touch area 1003 may be displayed on the injection display interface 700, so that operators can set parameters of the injection link or perform other operations.

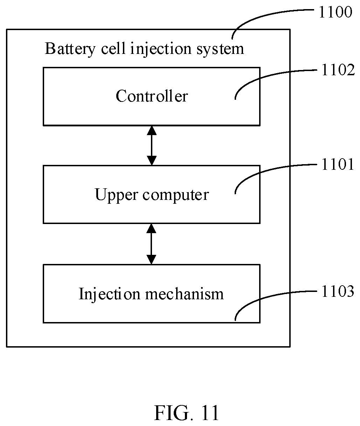

Correspondingly, some embodiments of this disclosure further provide a battery cell injection system. Referring to FIG. 11, FIG. 11 is a schematic diagram of a composition structure of a battery cell injection system according to some embodiments of this disclosure. The injection system 1100 includes an upper computer 1101, a controller 1102, and an injection mechanism 1103, where
the upper computer 1101 acquires, in response to a battery cell to be injected reaching the injection station, position memory information corresponding to the battery cell in a tray under the action of the controller 1102;
the upper computer 1101 determines an actual amount of prepared electrolyte and a specified amount of prepared electrolyte corresponding to the injection mechanism 1103; and
the upper computer 1101 acquires injection data of the battery cell in a case that a difference between the actual amount of prepared electrolyte and the specified amount of prepared electrolyte is less than or equal to a predetermined difference value; where
the injection data is acquired by the injection mechanism 1103 when performing injection on the battery cell, based on the actual amount of prepared electrolyte and the position memory information under the action of the controller 1102.

In some embodiments of this disclosure, the injection system 1100 may be applied to the battery cell injection method provided in any of the foregoing embodiments. For a detailed description of the upper computer 1101, the controller 1102, the injection mechanism 1103, and the like, reference may be made to the foregoing detailed description of the battery cell injection method.

The battery cell injection system provided by this disclosure is explained below using a specific embodiment. The battery cell injection system herein includes a controller, an upper computer, a code scanner, an injection mechanism, and the like.

When a battery cell is transported to an injection station in the injection process, the battery cell injection system performs the following four processes: 1. injection and code scanning; 2. electrolyte preparation; 3. injection and reading injection amount data; and 4. reading data of the battery cell transported into a standing chamber.

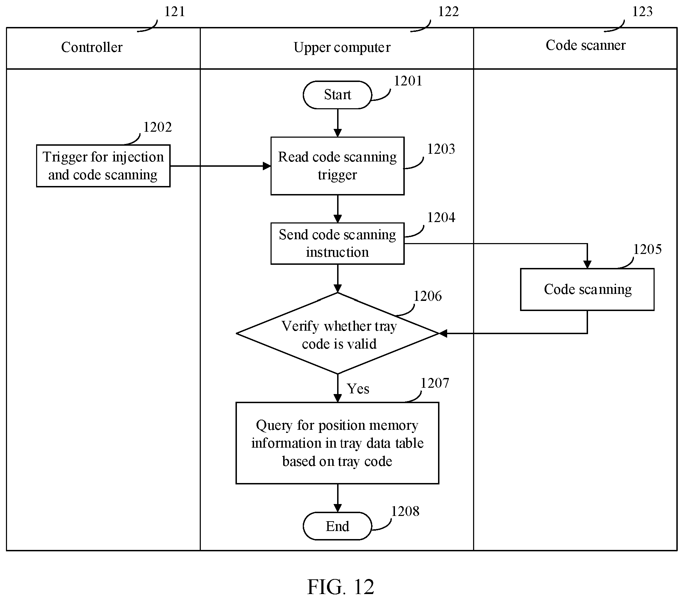

As shown in FIG. 12, a controller 121, an upper computer 122, and a code scanner 123 in the battery cell injection system perform injection and code scanning, which specifically includes the following steps.
1201. Start.
1202. The controller 121 sends a trigger for injection and code scanning to the upper computer 122. The case may be that: the controller 121 detects that a battery cell to be injected reaches the injection station, and sends a signal for injection and code scanning to the upper computer 122.
1203. The upper computer 122 reads the code scanning trigger.
1204. The upper computer 122 sends a code scanning instruction to the code scanner 123. The case may be that: the upper computer 122 sends the code scanning instruction to the code scanner 123 based on the received trigger signal for injection and code scanning.
1205. The code scanner 123 performs code scanning. The case may be that: the code scanner 123 scans the tray carrying the battery cell based on the received code scanning instruction to obtain a tray code of the tray (which may be a barcode).
1206. The upper computer 122 verifies the tray code obtained through scanning by the code scanner 123, that is, verifies whether the tray code is valid.
1207. The upper computer 122 queries for position memory information matching the tray code from a previously obtained tray data table if the tray code is valid.
1208. The upper computer 122 ends the injection and code scanning process after querying for the position memory information.

It should be noted that during the injection and code scanning process, a signal is sent to the controller 121 regarding each process performed by the upper computer 122 so that the controller 121 can acquire the real-time workflow of the upper computer 122 in real time. If the upper computer 122 determines that the tray code verification result is no, meaning that the tray code is found invalid during verification or the position memory information is not acquired, a signal of verification failure or failure to acquire relevant information is sent to the controller 121.

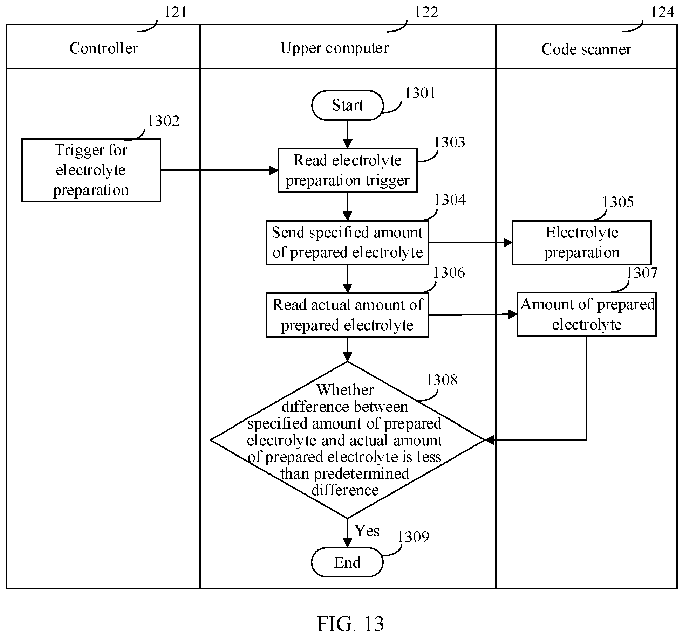

As shown in FIG. 13, a controller 121, an upper computer 122, and an injection pump 124 (that is, the injection mechanism mentioned above) in the battery cell injection system perform electrolyte preparation, which specifically includes the following steps.
1301. Start.
1302. The controller 121 sends an electrolyte preparation trigger to the upper computer 122. The case may be that: the controller 121 detects that a battery cell to be injected reaches the injection station and sends an electrolyte preparation signal to the upper computer 122.
1303. The upper computer 122 reads the electrolyte preparation trigger.
1304. The upper computer 122 determines a specified amount of prepared electrolyte based on the electrolyte preparation trigger, and sends the specified amount of prepared electrolyte to the injection pump 124 arranged corresponding to the injection station.
1305. Injection is performed. After receiving the specified amount of prepared electrolyte, the injection pump 124 performs electrolyte preparation.
1306. The upper computer 122 may send a signal for reading the actual amount of prepared electrolyte to the injection pump 124, so as to read the current injection amount of the injection pump 124. The case may be that: the upper computer 122 sends the signal for reading the actual amount of prepared electrolyte a period of time after sending the specified amount of prepared electrolyte to the injection pump.
1307. The injection pump 124 sends the actual amount of prepared electrolyte to the upper computer 122.
1308. The upper computer 122 checks whether a difference between the specified amount of prepared electrolyte and the actual amount of prepared electrolyte is less than or equal to a predetermined difference through comparison. If the difference is less than or equal to the predetermined difference, the injection pump 124 may be controlled later under the action of the controller 121 to perform injection on the battery cell; if the difference is greater than the predetermined difference, an alarm signal is reported.
1309. In a case that the difference is less than or equal to the predetermined difference, the electrolyte preparation link may be ended so that the upper computer 122 enters the next link.

It should be noted that during the electrolyte preparation process, a signal is sent to the controller 121 regarding each process performed by the upper computer 122 so that the controller 121 can acquire the real-time work data of the upper computer 122 in real time. If the upper computer 122 determines, through comparison, that the difference between the specified amount of prepared electrolyte and the actual amount of prepared electrolyte is greater than the predetermined difference, a signal of electrolyte preparation failure may be sent to the controller 121.

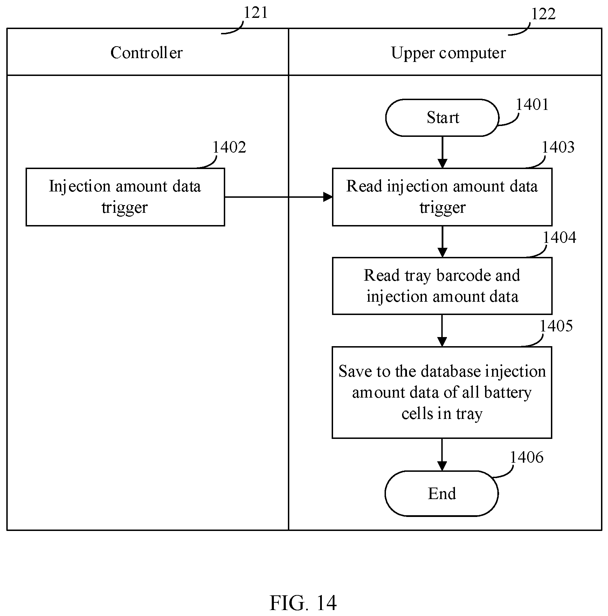

As shown in FIG. 14, a controller 121 and an upper computer 122 in the battery cell injection system perform injection and injection amount data reading, which specifically includes the following steps.
1401. Start.
1402. The controller 121 sends an injection amount data trigger to the upper computer 122.
1403. The upper computer 122 reads an injection amount data trigger signal sent by the controller 121.
1404. The upper computer 122 acquires data of the battery cell in the injection link, that is, reads injection amount data, based on a previously known battery cell code, a tray barcode, and the like.
1405. The upper computer 122 stores the read injection amount data, that is, stores in a database to save injection amount data of all battery cells in the tray.
1406. End.

During injection amount data reading in the injection process, a signal is also sent to the controller 121 regarding each process performed by the upper computer 122 so that the controller 121 can acquire the real-time work data of the upper computer 122 in real time.

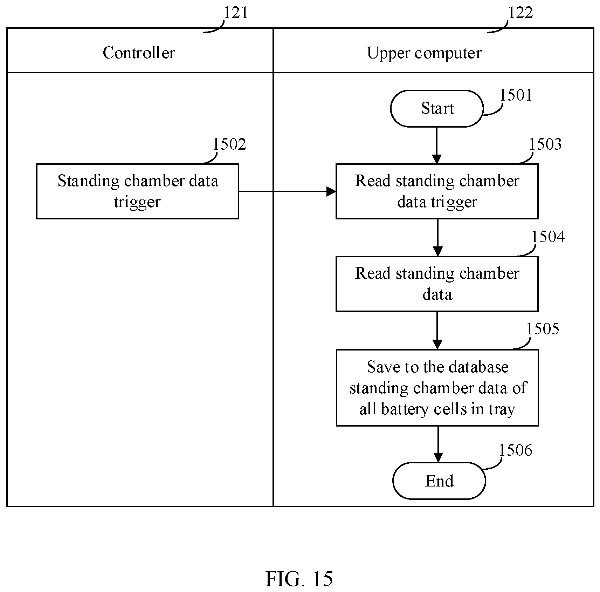

As shown in FIG. 15, a controller 121 and an upper computer 122 in the battery cell injection system perform reading of data of a battery cell transported into a standing chamber, which specifically includes the following steps.
1501. Start.
1502. The controller 121 sends a standing chamber data trigger to the upper computer 122.
1503. The upper computer 122 reads the standing chamber data trigger sent by the controller 121.
1504. The upper computer 122 reads data of the battery cell in the standing chamber based on the received standing chamber data trigger.
1505. The upper computer 122 stores the read data of the battery cell in the standing chamber, that is, stores in a database to save standing chamber data of all battery cells in the tray.
1506. End.

During the process of reading data of the battery cell transported into the standing chamber, a signal is sent to the controller 121 regarding each process performed by the upper computer 122 so that the controller 121 can acquire the real-time work data of the upper computer 122 in real time.

For further detailed implementations, reference may be made to the detailed description of the battery cell injection method in the foregoing embodiments, which are not repeated herein.

Some embodiments of this disclosure further provide a computer-readable storage medium, where the computer-readable storage medium stores a computer program, and when the computer program is executed by at least one processor, the battery cell injection method according to any one of the foregoing embodiments is implemented.

It should be understood that "one embodiment" or "an embodiment" mentioned throughout the specification means that a specific feature, structure, or characteristic related to the embodiment is included in at least one embodiment of this disclosure. Therefore, "in one embodiment" or "in an embodiment" appearing in various places throughout the specification does not necessarily refer to the same embodiment. In addition, these specific features, structures, or characteristics may be combined in one or more embodiments in any suitable manner. It should be understood that in various embodiments of this disclosure, the sequence of the numbers of the steps or processes mentioned above does not imply the order of execution. The execution order of the steps or processes should be determined by their functions and internal logic, and should not constitute any limitation on the implementation process of the embodiments of this disclosure. The serial numbers of the embodiments of this disclosure mentioned above are merely for description purposes and do not represent the advantages or disadvantages of the embodiments.

This disclosure uses descriptions of orientation or positional relationships indicated by "upper", "lower", "top", "bottom", "front", "rear", "inner", "outer", and the like, which are only for the convenience of describing this disclosure, rather than indicating or implying that the mentioned apparatus must have a specific orientation, be constructed and operated in a specific orientation, and therefore cannot be understood as a limitation on the protection scope of this disclosure.

In the description of this disclosure, it should further be noted that, unless otherwise clearly specified and limited, the terms "mount", "connect", and "link" should be understood in a broad sense, for example, it may be a fixed connection, a detachable connection, or an integral connection; or it may be a direct connection or an indirect connection through an intermediate medium. For those of ordinary skill in the art, the specific meanings of these terms in this disclosure can be understood according to specific circumstances.

It should be noted that in this disclosure, the terms "comprise", "include" or any other variations thereof are intended to cover a non-exclusive inclusion, such that a process, method, article, or apparatus that comprises a list of elements includes not only those elements, but also other elements not explicitly listed or inherent to such process, method, article, or apparatus. Without more restrictions, an element defined by the statement "includes a ......" does not exclude the existence of other identical elements in the process, method, article, or apparatus that includes the element.

In the several embodiments provided in this disclosure, it should be understood that the disclosed system, device, and method may be implemented in other manners. The device embodiments described above are merely illustrative. For example, the division of units is merely a logical function division, and there may be other division manners in actual implementation. For example, a plurality of units or components may be combined or integrated into another system, or some features may be ignored or not executed. In addition, the mutual coupling, direct coupling, or communication connection displayed or discussed among the respective components may be an indirect coupling or communication connection through some interfaces, devices, or units, and may be electrical, mechanical, or in other forms.

The units described above as separate components may or may not be physically separated, and the components displayed as units may or may not be physical units; they may be located in one place or distributed to a plurality of network units; some or all of the units may be selected according to actual needs to implement the solutions of this embodiment. In addition, functional units in the embodiments of this disclosure may be integrated into one processing unit, or each unit may exist alone as a unit, or two or more units may be integrated into one unit; the integrated unit may be implemented in the form of hardware or in the form of hardware and software functional units.

The foregoing are merely embodiments of this disclosure, but the scope of protection of this disclosure is not limited thereto. Any variation or replacement that can be easily conceived by any person skilled in the art within the technical scope disclosed in this disclosure shall fall within the scope of protection of this disclosure.

### INDUSTRIAL APPLICABILITY

Embodiments of this disclosure provide a battery cell injection method and system. In response to a battery cell to be injected reaching an injection station, position memory information corresponding to the battery cell in a tray carrying the battery cell is acquired, a specified amount of prepared electrolyte and an actual amount of prepared electrolyte of an injection mechanism that performs injection on the battery cell at the injection station are determined, and then injection data of the battery cell is acquired in a case that a difference between the actual amount of prepared electrolyte and the specified amount of prepared electrolyte is less than or equal to a predetermined difference value, where the injection data is acquired by the injection mechanism when performing injection on the battery cell, based on the position memory information and the actual amount of prepared electrolyte. In this way, injection is performed when the difference between the actual amount of prepared electrolyte and the specified amount of prepared electrolyte of the injection mechanism satisfies a specified value, which improves the stability and efficiency of injection. In addition, the specific position of a battery cell can be obtained based on the position memory information, further improving the injection efficiency and accuracy of the battery cell.

## Claims

1. A battery cell injection method applied to an upper computer, wherein the injection method comprises:
in response to a battery cell to be injected reaching an injection station, acquiring position memory information corresponding to the battery cell in a tray;
determining an actual amount of prepared electrolyte and a specified amount of prepared electrolyte corresponding to an injection mechanism deployed at the injection station; and
acquiring injection data of the battery cell in a case that a difference between the actual amount of prepared electrolyte and the specified amount of prepared electrolyte is less than or equal to a predetermined difference value; wherein
the injection data is acquired by the injection mechanism when performing injection on the battery cell, based on the actual amount of prepared electrolyte and the position memory information.

2. The injection method according to claim 1, wherein the acquiring position memory information corresponding to the battery cell in a tray in response to a battery cell to be injected reaching an injection station comprises:
acquiring a tray code of the tray in response to the battery cell reaching the injection station; and
determining the position memory information associated with the tray code in a tray data table; wherein
the tray data table is acquired when the battery cell is at a code scanning station, and the code scanning station is a station previous to the injection station.

3. The injection method according to claim 2, wherein the acquiring a tray code of the tray in response to the battery cell reaching the injection station comprises:
acquiring an electrolyte preparation code scanning signal sent by a controller in response to the battery cell reaching the injection station; and
controlling, based on the electrolyte preparation code scanning signal, a code scanning mechanism to scan the tray to obtain the tray code.

4. The injection method according to any one of claims 1 to 3, wherein the determining an actual amount of prepared electrolyte and a specified amount of prepared electrolyte corresponding to an injection mechanism deployed at the injection station comprises:
receiving from a controller an electrolyte preparation signal carrying the specified amount of prepared electrolyte; and
controlling, based on the electrolyte preparation signal, the injection mechanism to perform electrolyte preparation, and determining a currently read amount of prepared electrolyte of the injection mechanism as the actual amount of prepared electrolyte upon completion of electrolyte preparation by the injection mechanism.

5. The injection method according to any one of claims 1 to 4, wherein the injection method further comprises:
reading standing data of the battery cell in response to the battery cell being at a standing station in a standing mechanism; and
determining the injection data of the battery cell and the standing data of the battery cell as process data of the battery cell in an injection process; wherein
the standing station is a station subsequent to the injection station.

6. The injection method according to claim 5, wherein the reading standing data of the battery cell in response to the battery cell being at a standing station in a standing mechanism comprises:
receiving a reading signal sent by a controller in response to a duration for the battery cell left at the standing station reaching a predetermined duration; and
reading, based on the reading signal, a battery cell parameter corresponding to the battery cell after standing to obtain the standing data.

7. The injection method according to claim 6, wherein the injection data at least comprises an injection rate, an injection duration, and a vacuuming duration, the standing data at least comprises a standing duration and a voltage parameter, and the injection method further comprises:
writing the injection rate, the injection duration, the vacuuming duration, the standing duration, and the voltage parameter into a battery cell data table based on a battery cell code of the battery cell to update the battery cell data table; wherein
the battery cell code is acquired when the battery cell is at a code reading station; and the code reading station is a station previous to the injection station.

8. The injection method according to any one of claims 1 to 7, wherein the acquiring position memory information corresponding to the battery cell in a tray in response to a battery cell to be injected reaching an injection station comprises:
presenting an injection display interface; wherein the injection display interface comprises an injection data frame and an electrolyte preparation control; and
displaying the position memory information corresponding to the battery cell in the tray in the injection data frame in response to the battery cell reaching the injection station;
the determining an actual amount of prepared electrolyte and a specified amount of prepared electrolyte corresponding to an injection mechanism deployed at the injection station comprises:
displaying, in response to a trigger for the electrolyte preparation control, the actual amount of prepared electrolyte and the specified amount of prepared electrolyte corresponding to the injection mechanism in the injection data frame; and
the acquiring injection data of the battery cell in a case that a difference between the actual amount of prepared electrolyte and the specified amount of prepared electrolyte is less than or equal to a predetermined difference value comprises:
displaying the injection data of the battery cell in the injection data frame in response to the difference between the actual amount of prepared electrolyte and the specified amount of prepared electrolyte being less than or equal to the predetermined difference value.

9. The injection method according to claim 8, wherein the injection method further comprises:
displaying the standing data of the battery cell in the injection data frame in response to the battery cell being at the standing station in the standing mechanism; and
displaying process data in the injection data frame; wherein
the process data comprises the injection data of the battery cell and the standing data of the battery cell.

10. A battery cell injection system, wherein the injection system comprises an upper computer, a controller, and an injection mechanism, wherein
the upper computer acquires, in response to a battery cell to be injected reaching the injection station, position memory information corresponding to the battery cell in a tray under the action of the controller;
the upper computer determines an actual amount of prepared electrolyte and a specified amount of prepared electrolyte corresponding to the injection mechanism; and
the upper computer acquires injection data of the battery cell in a case that a difference between the actual amount of prepared electrolyte and the specified amount of prepared electrolyte is less than or equal to a predetermined difference value; wherein
the injection data is acquired by the injection mechanism when performing injection on the battery cell, based on the actual amount of prepared electrolyte and the position memory information under the action of the controller.

11. The injection system according to claim 10, wherein
the upper computer acquires a tray code of the tray in response to the battery cell reaching the injection station; and
the upper computer determines the position memory information associated with the tray code in a tray data table; wherein
the tray data table is acquired when the battery cell is at a code scanning station, and the code scanning station is a station previous to the injection station.

12. The injection system according to claim 11, wherein
the upper computer acquires an electrolyte preparation code scanning signal sent by a controller in response to the battery cell reaching the injection station; and
the upper computer controls, based on the electrolyte preparation code scanning signal, a code scanning mechanism to scan the tray to obtain the tray code.

13. The injection system according to any one of claims 10 to 12, wherein
the upper computer receives from a controller an electrolyte preparation signal carrying the specified amount of prepared electrolyte; and
the upper computer controls, based on the electrolyte preparation signal, the injection mechanism to perform electrolyte preparation, and determines a currently read amount of prepared electrolyte of the injection mechanism as the actual amount of prepared electrolyte upon completion of electrolyte preparation by the injection mechanism.

14. The injection system according to any one of claims 10 to 13, wherein
the upper computer reads standing data of the battery cell in response to the battery cell being at a standing station in a standing mechanism; and
the upper computer determines the injection data of the battery cell and the standing data of the battery cell as process data of the battery cell in an injection process; wherein
the standing station is a station subsequent to the injection station.

15. The injection system according to claim 14, wherein
the upper computer receives a reading signal sent by a controller in response to a duration for the battery cell left at the standing station reaching a predetermined duration; and
the upper computer reads, based on the reading signal, a battery cell parameter corresponding to the battery cell after standing to obtain the standing data.

16. The injection system according to claim 15, wherein the injection data at least comprises an injection rate, an injection duration, and a vacuuming duration, the standing data at least comprises a standing duration and a voltage parameter; and
the upper computer writes the injection rate, the injection duration, the vacuuming duration, the standing duration, and the voltage parameter into a battery cell data table based on a battery cell code of the battery cell to update the battery cell data table; wherein
the battery cell code is acquired when the battery cell is at a code reading station; and the code reading station is a station previous to the injection station.

17. The injection system according to any one of claims 10 to 16, wherein
the upper computer presents an injection display interface; wherein the injection display interface comprises an injection data frame and an electrolyte preparation control; and
the upper computer displays the position memory information corresponding to the battery cell in the tray in the injection data frame in response to the battery cell reaching the injection station;
the upper computer displays, in response to a trigger for the electrolyte preparation control, the actual amount of prepared electrolyte and the specified amount of prepared electrolyte corresponding to the injection mechanism in the injection data frame;
the upper computer displays the injection data of the battery cell in the injection data frame in response to the difference between the actual amount of prepared electrolyte and the specified amount of prepared electrolyte being less than or equal to the predetermined difference value.

18. The injection system according to claim 17, wherein
the upper computer displays the standing data of the battery cell in the injection data frame in response to the battery cell being at the standing station in the standing mechanism; and
the upper computer displays process data in the injection data frame; wherein
the process data comprises the injection data of the battery cell and the standing data of the battery cell.
